# EUROPEAN PATENT APPLICATION

(11) **EP 1 867 504 A2**
(43) Date of publication of application: **19.12.2007**
(21) Application number: 06125295.3
(22) Date of filing: 04.12.2006
(51) Int. Cl.: B60H 1/00

(54) **A refrigerator group for commercial vehicles**

(30) Priority: 14.06.2006 IT RE20060074
(71) Applicant: EUROFRIGO S.R.L., 42100 Reggio Emilia (IT)
(72) Inventor: Menozzi, Maurizio, 42100 Reggio Emilia (IT)
(74) Representative: Corradini, Corrado

(57) **Abstract**

A refrigerator group destined to be installed on board a vehicle, comprising an evaporation unit, a condensation unit and an alternating-current electrical compressor (1), to which an inverter (3) is connected, which inverter (3) provides the compressor (1) with an operating current, the inverter (3) being powered by a battery group (4) which comprises at least a main battery (40) connected to a generator of current (42) powered by the vehicle motor.

## Description

The invention relates to a refrigerator group destined to be installed on commercial vehicles for creating a refrigerated cell in which transported goods can be conserved.

More in particular, the invention relates to a refrigerator group destined for medium-to-small commercial vehicles, typically with a capacity of 3500 kilograms.

As is known, refrigerator groups used in this type of application comprise a condenser unit, an evaporator unit and a compressor unit, which are crossed, in a closed circuit, by a proper refrigerator fluid.

Among the above units, only the compressor unit requires energy in order to function.

Generally it comprises a mechanical compressor which is powered directly by the motor of the vehicle to which the refrigerator group is associated.

This solution leads to some drawbacks.

A first drawback is that complicated and expensive mechanical transmissions systems are required for transmitting drive from the motor of the vehicle to the compressor.

A second drawback is that the compressor must be positioned close to the motor and therefore must be connected to the other components of the refrigerator group by means of hydraulic conduits which are long and winding as well as often expensive and difficult to install.

A further drawback is that the compressor cannot function with the motor switched off, preventing long-term maintenance of the correct conservation temperature of the goods.

The last above drawback, in particular, has generally been overcome by installing, together with the mechanical compressor, also an electric compressor predisposed to be connected to the main fixed electrical supply when the vehicle is parked.

This duplication of the compressors however leads to a high constructional complication of the refrigerator group, from the point of view of both the mechanical aspect and the electronic aspect of the control systems, as well as extra and not negligible costs.

Alternatively, the use of a direct-current powered compressor has been proposed, which is directly connected to the vehicle's battery.

In this case, it has however been found that the low-tension current generated by the vehicle battery, usually 12V, leads to a poor refrigeration performance on the part of the compressor.

The aim of the present invention is to obviate the above-mentioned drawbacks in the prior art, with a simple and rational solution having reasonable costs.

The aim is attained by the invention as it is characterised in the appended claims.

In particular, the invention makes available a refrigerator group for commercial vehicles, in which the compressor is an electric compressor which can be powered by an alternating current source.

In an important aspect of the invention, the electric compressor is supplied by a battery group, located on-board the vehicle, through an inverter, which transforms the direct current generated by the battery group into alternating current.

The battery group comprises at least a main battery which is recharged by a current generator powered directly by the vehicle motor.

Preferably the main battery and the current generator are those already installed on board the vehicle and destined to supply all the electrical apparatus thereon installed.

In particular, the current generator comprises an alternator to which a rectifier is associated for providing direct current to the battery.

Thanks to this solution, it is advantageously possible to locate the electrical compressor close to the other components of the refrigerator group, in this way avoiding the need to install a mechanical compressor powered by the vehicle motor, with the relative mechanical systems for drive transmission and the relative hydraulic connection pipes to the refrigerator group.

Further, by carefully selecting the inverter, it is possible to power the electrical compressor with high-tension alternating current, for example 220-240V and 50Hz, thus obtaining a refrigerating performance which is higher than with a compressor supplied with low-tension current.

In a further important aspect of the invention, the compressor is powered by the inverter via a switch which is commutable between a first operative configuration, in which it electrically connects the compressor to the inverter, and a second operative configuration in which it electrically connects the compressor to an auxiliary electrical circuit which comprises a plug for connection to the grid electrical power supply.

In this way, it is advantageously possible to provide the refrigerator group with only the alternating current electric compressor, which can be directly supplied by the grid electrical supply source when the vehicle is parked.

Further characteristics and advantages of the invention will better emerge from a reading of the following description, provided by way of non-limiting example with the aid of the figure of the accompanying table of drawings, in which :

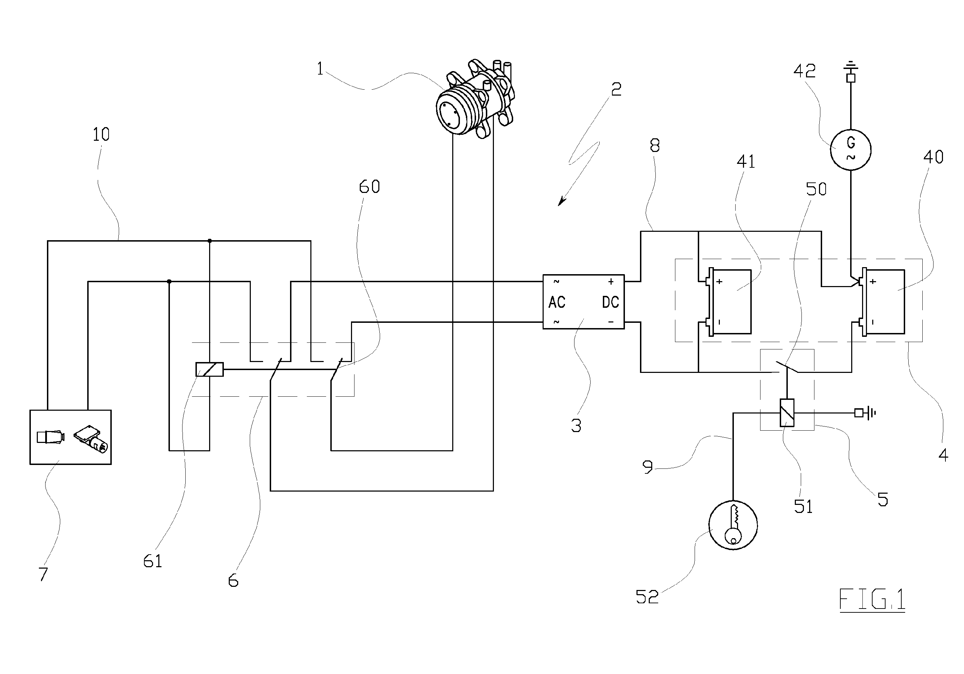

Figure 1 is the electrical diagram of the supply system of the compressor of the refrigerator group which is the object of the invention.

The refrigerator group of the invention is destined to be installed on board a commercial vehicle, for cooling at least a loading chamber in which the transported goods are to be conserved.

In particular, the application of this refrigerator group is envisaged for vehicles of medium or small size, with a payload of up to 3500 Kg; these vehicles can be designed for the transport of products requiring a refrigerated environment, such as for example perishable food products.

Schematically, the refrigerator group of the invention comprises a condenser unit, an evaporator unit and a compression unit, which are crossed in a closed circuit by a suitable refrigerator fluid.

Preferably the refrigerator fluid is an ecological gas (e.g. R-404 A).

The architecture of these units, as well as their reciprocal connecting-up and interaction, are of known type to experts in the field, and are therefore not further detailed.

The refrigerator group must obviously be equipped with all of the protection apparatus needed in order for the pressures never to exceed those levels which might pose a risk; nor must those pressures drop to levels at which the group would be unable to provide the refrigeration required.

Further, the refrigerator group is completed by a thermostat which in connection with sensors monitors the temperatures inside the loading compartment of the vehicle so that the temperatures can be regulated according to the parameters set each time by the user.

According to the invention, the compression unit comprises an alternating-current electrical compressor 1 i.e. a compressor 1 powered by an electric motor predisposed to be supplied by an alternating current.

The compressor 1 is preferably of a rotary type and is able to absorb a high-tension alternating current, for example 220-240V and 50 Hz.

The compressor 1 is associated to an electrical system 2, the circuit diagram of which is illustrated in figure 1.

The electrical system 2 comprises an inverter 3 which transforms the direct electrical current produced by a battery group 4, located on board the vehicle, into alternating current for supplying the compressor 1.

As illustrated in figure 1, the battery group 4 and the inverter 3 are located in series along a same direct-current electrical circuit 8.

In particular, the battery group 4 comprises a main battery 40 and a reserve battery 41, which are arranged in parallel in order that they can both supply the inverter 3.

Further, the main battery 40 is connected to an alternator 42 which is powered by the vehicle motor, and which is provided with a rectifier (not illustrated), in order to generate direct electrical current; this alternator 42 therefore recharges both batteries 40, 41.

Preferably the main battery 40 and the alternator 42 are those already equipped on the vehicle for supplying all the electrical apparatus thereof.

For this reason the main battery 40 is generally a 12V/24V and 100-120Ah battery, while the alternator can produce at least 150-200Ah.

In this context, the reserve battery 41 is preferably a normal lead or slow discharge 150Ah battery.

As illustrated in figure 1, the reserve battery 41 is constantly connected to the inverter 3, while the main battery 40 can be alternatively connected thereto or disconnected therefrom.

The parallel branch in which the main battery 40 is inserted is intercepted by a relay 5.

The relay 5 schematically comprises a single-pole single-throw switch 50, activated by a coil 51 to move between an open position and a closed position, in which it respectively prevents or establishes an electrical connection between the main battery 40 and the inverter 3.

Preferably the changeover contact is chosen so that it can support an alternating current electrical charge of at least 30V and 100A.

In particular, the single-pole single-throw switch is destined to be in the closed position only when the coil 51 is energised, when a tension is applied on the terminals; it returns into the open position each time the coil 51 is de-energised.

In the illustrated embodiment, the coil 51 is inserted in a direct-current control circuit 9, with the positive key-controlled so that tension is applied only when the vehicle ignition key 52 is inserted in the dashboard.

The coil 51 is preferably chosen so that it can support a 12C/24V direct current according to the type of vehicle.

As illustrated in figure 1, the inverter 3 is connected to the compressor 1 through a relay 6 which is commutable between a first operative configuration, in which it electrically connects the compressor 1 to the inverter 3, and a second operative configuration, in which it electrically connects the compressor 1 to an auxiliary electrical circuit 10 which comprises a connecting plug 7 to a fixed electrical supply grid.

Schematically, the relay 6 comprises a double-pole double-throw switch 60 activated by a coil 61 between the first and second operative configurations, in order alternatively to electrically connect the compressor 1 to the inverter 3 or to the electrical fixed grid supply.

In particular, the double-throw switch is in the second operative configuration only when the coil 61 is energised, while it returns to the first operative configuration each time the coil 61 is newly de-energised.

In the illustrated embodiment, the coil 61 is inserted in the auxiliary electrical circuit 10 in parallel with the switch 60, in order to be automatically subjected to the grid tension each time the plug 7 is connected to the grid supply.

In the illustrated embodiment the current supplied by the fixed grid is 220V-240V at a frequency of 50Hz.

The double-pole double-throw switch 60 and the coil 61 are appropriately selected in order to be able to support the above-mentioned electrical charge in alternating current of 220V and 16A. The plug 7 preferably comprises an earth connection and is chosen in order to be able to absorb an alternating current of 220V and 16A.

Accordingly, the compressor 1 is chosen to be able to be supplied with an alternating current with tension and frequency equal to those provided by the fixed grid, and in particular by an alternating current of 220V-240V and 50 Hz.

Correspondingly to the electrical characteristics of the compressor 1, the inverter 3 is chosen in order to be able to transform direct current at 12V/24V (equal to the tension of the batteries 40, 41) in alternating current at high tension, comprised between 220V-240V at a frequency of 50Hz.

In use, the refrigerator group functions in its usual way, following the parameters set by the user via the control thermostat.

In accordance with the above description, the compressor 1 is supplied differently according to whether the vehicle on which it is installed is moving or parked.

When the vehicle is parked, the plug 7 is connected to the fixed electrical grid and the key 52 of the vehicle is removed from the dashboard.

The coil 61 of the relay 6 is thus subjected to the grid tension and is energised, bringing the switch 60 into the second operative configuration.

In this way, the compressor 1 is connected only with the plug 7 and is supplied by the fixed grid.

The coil 51 of the relay 5 placing the main battery 40 and the reserve battery 41 in parallel is de-energised.

In this way, the main battery 40, which is also the vehicle battery, is disconnected from the inverter 3 in order not to discharge.

When the vehicle is moving, the plug 7 is disconnected from the fixed grid and the key 52 of the vehicle is inserted in the dashboard.

The coil 61 of the relay 6 is de-energised and the switch 60 is therefore in the first operative configuration, while the coil 51 of the relay 5 is energised, bringing the switch 50 into the closed position.

In this way, the compressor 1 is supplied only by the inverter 3, which transforms the direct current provided by the two batteries 40, 41 in parallel into alternating current.

Obviously an expert in the field may bring numerous modifications of a practical-applicational nature to the refrigerator group as described above, without its forsaking the ambit of the inventive idea as claimed herein below.

## Claims

1. A refrigerator group destined to be installed on board a vehicle, the refrigerator group comprising an evaporation unit, a condensation unit and a compressor (1), **characterised in that** the compressor (1) is an alternating-current electrical compressor, which is connected to an inverter (3) which inverter (3) provides the compressor (1) with an operating current, the inverter (3) being powered by a battery group (4) which comprises at least a main battery (40) connected to a generator of current (42) powered by the vehicle motor.

2. The refrigerator group of claim 1, **characterised in that** the compressor (1) is connected to the inverter (3) via a switch (60) which switch (60) is commutable between a first operative configuration, in which the switch (60) electrically connects the compressor (1) to the inverter (3), and a second operative configuration, in which the switch (60) electrically connects the compressor (1) to an auxiliary electrical circuit (10) which comprises a plug (7) for connecting to a fixed electrical supply.

3. The refrigerator group of claim 2, **characterised in that** the switch (60) is associated to a coil (61) which when energised brings the switch (60) into the second operative configuration and when de-energised maintains the switch (60) in the first operative configuration.

4. The refrigerator group of claim 3, **characterised in that** the coil (61) is inserted in the auxiliary electrical circuit in parallel with the switch (60).

5. The refrigerator group of claim 3, **characterised in that** the coil (61) and the switch (60) are associated in a single relay (6) device.

6. The refrigerator group of claim 1, **characterised in that** the battery group (4) comprises a reserve battery (41) placed in parallel with the main battery (40).

7. The refrigerator group of claim 6, **characterised in that** a switch (50) is located on a branch of the parallel circuit comprising the main battery (40), which switch (50) is commutable between a closed configuration and an open configuration, in which closed configuration an electrical connection between the main battery (40) and the inverter (3) is enabled, and in which open configuration the electrical connection between the main battery (40) and the inverter (3) is prevented.

8. The refrigerator group of claim 7, **characterised in that** the switch (50) is associated to a coil (51) which when energised brings the switch (50) into the closed configuration, and when de-energised maintains the switch (50) in the open configuration.

9. The refrigerator group of claim 8, **characterised in that** the coil (51) is inserted in a circuit (9) to which tension is applied when an ignition key (52) of the vehicle is inserted in the vehicle dashboard.

10. The refrigerator group of claim 8, **characterised in that** the coil (51) and the switch (50) are associated in a single relay device (5).

11. The refrigerator group of claim 1, **characterised in that** the electric compressor (1) is predisposed to be supplied by an alternating current having a tension and a frequency which are equal to a current supplied by the fixed grid.

12. The refrigerator group of claim 1, **characterised in that** the electrical compressor (1) is predisposed to be supplied by an alternating current having a tension comprised between 220V and 240V and a frequency of 50Hz.

13. The refrigerator group of claim 1, **characterised in that** the inverter (3) can generate a high-tension alternating electrical current .

14. The refrigerator group of claim 13, **characterised in that** the inverter (3) can generate a tension comprised between 220V and 240V.

15. The refrigerator group of claim 1, **characterised in that** the inverter (3) can generate an alternating electrical current having a frequency of 50Hz.

16. The refrigerator group of claim 1, **characterised in that** the electrical compressor (1) is a rotary compressor.

17. The refrigerator group of claim 1, **characterised in that** the generator of current (42) comprises an alternator to which a rectifier is associated.
